# EUROPEAN PATENT APPLICATION

(11) **EP 4 834 715 A1**
(43) Date of publication of application: **04.11.2026**
(21) Application number: 25173245.9
(22) Date of filing: 29.04.2025
(51) Int. Cl.: B62D 5/04, B62D 15/02, B62D 5/093

(54) **SAFETY MECHANISM LIMITING TORQUES PROVIDED BY AN ELECTRIC MOTOR MECHANICALLY COUPLED TO A STEERING INPUT DEVICE, MOTOR CONTROLLER, AND STEERING SYSTEM**

(71) Applicant: Danfoss Power Solutions ApS, 6430 Nordborg (DK)
(72) Inventor: Petersen, Morten Hoeck, 6430 Nordborg (DK); Lomholt, Rasmus Lykke, 6430 Nordborg (DK); Bauer, Thomas, 6430 Nordborg (DK); Hansen, Thomas Traeger, 6430 Nordborg (DK); Chawla, Rajat, 6430 Nordborg (DK)
(74) Representative: Keil & Schaafhausen Patentanwälte PartGmbB

(57) **Abstract**

The invention relates to a safety mechanism for limiting motor torques (MT) provided by an electric motor (5) that is mechanically coupled with respect to a steering input device (2) of a steering system (1) for applying the motor torques (MT) on the steering input device (2), the steering input device (2) being mechanically operable by an operator (90), wherein torque-indicating values are indicative of the motor torques (MT). For increasing the safety of the operation of an electric motor (5), the safety mechanism at least limits the motor torque (MT) if the torque-indicating value is outside a permission map (PM) of permissible torque-indicating values. The invention further relates to a motor controller (6) and to a steering system (1).

## Description

The invention relates to a safety mechanism for limiting motor torques provided by an electric motor that is mechanically coupled with respect to a steering input device of a steering system for applying the motor torques on the steering input device, the steering input device being mechanically operable by an operator. The invention further relates to a motor controller for such an electric motor and to a steering system for a vehicle.

Various types of hydraulic steering systems for vehicles are known. A steering command finally results in a change of a wheel direction angle of one or more steerable wheels of the vehicle with respect to a longitudinal axis of the vehicle, thereby changing a direction of movement of the vehicle.

Some hydraulic steering systems employ electrohydraulic valves (e.g. fail-safe electrohydraulic steering systems with emergency braking, hybrid steering systems employing a traditional hydraulic steering unit with at least one metering pump and an electrohydraulic valve assembly, and steer-by-wire systems employing redundant electrohydraulic valves).

An exemplary hydraulic steering system is, for example, shown in Figure 1 of DE 10 2007 053 024 A1. Some modifications are described in EP 2 762 387 A1. The hydraulic steering system comprises a (traditional) hydraulic steering unit and additionally an electrohydraulic valve assembly that allows for electronically controlled hydraulic steering (electrohydraulic steering). A steering cylinder can be actuated by the electronic valve assembly and by the hydraulic steering unit.

Often, a steering wheel is used as a steering input device. An operator can mechanically operate the steering wheel for changing a direction of movement of the vehicle.

Without further measures, a traditional hydraulic steering system does not provide a restoring force to the steering wheel for bringing back the steering wheel back into a neutral position corresponding to the wheel direction angle being neutral (which may be defined as being zero). No haptic feedback is given to the operator.

In order to provide haptic feedback to the operator, an electric motor can be mechanically coupled to a steering shaft of a steering column, wherein the steering shaft is rotationally coupled with the steering wheel. The electric motor can apply motor torques to the steering shaft and hence to the steering wheel. In particular, a restoring force for restoring the steering wheel back to the neutral position, similar as in a rack and pinion steering, can be generated.

High demands are placed on the safety of steering systems. It has to be ensured that the operator has sufficient control over the vehicle at all times. For example, there are strong safety requirements regarding sensors that provide data based on which the motor torques to be applied on the steering input device are calculated. Such sensors may include, for example, a wheel direction angle sensor for measuring a wheel direction angle of the steerable wheels. For example, redundant sensor can be provided.

The problem underlying the invention is to provide an approach for increasing the safety of the operation of an electric motor that is used in a steering system and mechanically coupled with respect to a steering input device, e.g. a steering wheel, for providing motor torques on the steering input device.

The problem is solved by a safety mechanism with the features of claim 1.

The safety mechanism is for limiting motor torques provided by an electric motor that is mechanically coupled with respect to a steering input device of a steering system for applying the motor torques on the steering input device, e.g. for providing haptic feedback to user, wherein the steering input device is mechanically operable by a user. Torque-indicating values are indicative of the motor torques.

The safety mechanism at least limits the motor torque if the torque-indicative value is outside a permission map of permissible torques-indicating values. In this context "the torque-indicative value" may be the present one of the torque-indicative values.

Due to the permission map, the torques that are permissible to be applied by the electric motor can be specifically adapted / tailored for different circumstances. The permission map may comprise several different thresholds for permissible torque indicating values (and corresponding motor torques) for different circumstances.

The safety mechanism ensures that the motor torque is never more than what the operator can handle. For example, the permission map may permit only torque-indicating values that correspond to motor toques below a predetermined global maximum motor torque. The global maximum motor torque might be in the range from 3 Nm to 10 Nm, e.g. in the range from 4 Nm to 6 Nm.

The term torque-indicating values may refer to any parameters that are indicative of the motor torque (to be) applied by the electric motor. Especially, the torque-indicating values may include
- the motor torques applied by the electric motor (e.g. as actually applied and/or sensed by a torque sensor),
- the motor torques to be applied by the electric motor (e.g. as calculated by a controller),
- electric currents supplied to the electric motor (e.g. by a motor controller), the electric currents being indicative of the motor torques, and/or
- control output data that is indicative of the motor torques and/or the electric currents supplied to the electric motor, the electric currents being indicative of the motor torques.

The safety mechanism may be an additional, independent, and/or separate safety functionality. For example, the safety mechanism may be implemented as a functionality separate from a torque calculation functionality for calculating the torque-indicating values.

The safety mechanism intervenes if the torque-indicating values becomes excessive. This might, for example, happen if there is:
- an error in calculation instructions for calculating the torque-indicative values,
- an unexpected behavior of the calculation instructions under certain circumstances,
- an error in processing the calculations instructions properly,
- and/or the like.

Such types of errors cannot be prevented by requirements solely concerning input data for calculating the torque-indicating values, e.g. by redundancy requirements regarding steering input sensors, wheel direction angle sensors, and the like.

The present invention hence introduces an additional protection against errors that may occur with respect to determining the desired motor torques (or in more general, the torque-indicating values), e.g. in a motor controller for controlling the electric motor, and/or in the transmission of the torque-indicating values to the electric motor.

According to one aspect, the safety mechanism as such does not take part in controlling the electric motor in normal operation.

Normal operation may mean that the torque-indicating values are within expected borders (e.g. within an expected torques map as introduced below). Additionally or alternatively, normal operation may mean that there is no error/malfunction. Additionally or alternatively, normal operation may mean that the motor control works as intended without undesired behavior.

For example, the safety mechanism as such does not calculate the torque-indicating values. It does not determine any one of the motor torques to be applied to the electric motor, the electric currents, and the control output data.

"Active steering" may mean (include situations) when the user actively mechanically operates the steering input device for increasing a wheel direction angle of a steerable wheel away from a neutral wheel direction angle.

Reactive steering may mean (include situations) when the operator does not operate the steering input device. Reactive steering might also include situations when the operator holds the steering input device without increasing the wheel direction angle of the steerable wheel away from the neutral position and/or situations when the operator slows down a restoring movement of the steering input device towards a neutral position. Such restoring movements may be caused by the electric motor applying motor torques, in particular "restoring torques". The neutral position (of the steering input device) may correspond to the wheel direction angle being neutral, e.g. corresponding to straight movement of the vehicle.

The permission map may enclose permissible values for the torque-indicating values depending on specific input data. The safety mechanism may include an interface for receiving the specific input data (e.g. a hardware interface and/or a software interface).

The specific input data may include (especially consist of) information on a movement speed of the steering input device and/or a movement direction of the steering input device (e.g. leftward or rightward movement).

The safety mechanism may be configured to receive the torque-indicating values (e.g. from the torque calculation functionality). The safety mechanism may include an interface for receiving the torque-indicating values (e.g. a hardware interface and/or a software interface). The safety mechanism may use the present torque-indicating value as an input.

The safety mechanism can be configured to check whether the present torque-indicating value is within the permission map or not. It can consider an absolute value of the torque-indicating value, a "direction" of the torque-indicating value (e.g. positive or negative and/or a direction flag), and/or the present specific input data (for example information on the movement speed of the steering input device).

In one embodiment, the permission map corresponds to an area in a plane spanned by an axis for the movement speed of the steering input device and an axis for the torque-indicating values. The permission map may define permissible ranges for the torque-indicating value depending on the movement speed of the steering input device. The permissible ranges may be different for at least two different movement speeds of the steering input device.

Just for example, in said plane, an x-axis (an abscissa) may correspond to the movement speed of the steering input device and/or a y-axis (an ordinate) may correspond to the torque-indicating value, or vice versa.

As noted above, the permission map can correspond to an area in said plane.

The area may be point-symmetrical to an origin of the coordinate system. This corresponds to a behavior of the steering system that "feels" symmetric for the operator, with respect to a neutral position, for leftward direction and rightward direction.

In one embodiment, the area is non-mirror-symmetrical to the axis related to the torque-indicating value. Additionally or alternatively, the area can be non-mirror-symmetrical to the axis related to the movement speed of the steering input device. This corresponds to different absolute values of the permissible torque for the same movement direction of the steering input device for active steering and reactive steering.

According to an aspect, the information on the steering input device movement can include the movement direction of the steering input device. For example, positive values may correspond to rightward movements (e.g. clockwise rotation of the steering wheel) and negative values may correspond to leftward movements of the steering input device (e.g. counterclockwise rotation of the steering wheel). Additionally or alternatively, a flag could carry the information regarding the movement direction of the steering input device.

The torque-indicating values may include information corresponding to absolute values of the motor torques and information corresponding to a direction of the motor torque. For example, a negative motor torque value may correspond to a motor torque urging the steering input device leftward-oriented and a positive motor torque value may correspond to a motor torque urging the steering input device rightward-oriented.

Torque-indicating values that are not enclosed (covered) by the permission map are outside the permission map and may be impermissible.

For example, the steering input device can be a steering wheel. The movement speed of the steering input device may be expressible in rotations of the steering wheel per time unit, e.g. in rotations per minute.

The safety mechanism may be configured to determine based on the present torque-indicating value and the present specific input data whether active steering takes place at the moment or not.

The safety mechanism may be configured to determine based on the present torque-indicating value and the present specific input data whether reaction steering takes place at the moment or not.

According to one aspect, the permission map exhibits different maximum permissible torque values depending on one of, several of, or all of the following:
- the movement speed of the steering input device,
- the movement direction of the steering input device, and
- whether active steering takes place (at the moment) or not.

In one embodiment, the safety mechanism shuts down the electric motor if the torque-indicating value is outside the permission map. Again, in this context "the torque-indicative value" may be the present one of the torque-indicative values. As a result, the application of motor torques by the electric motor is stopped. In other words, the application of active torques generated by the electric motor is limited to zero. This does not exclude that the motor might still passively cause some inertia against movements of the steering input device caused by the operator.

Additionally or alternatively, the safety mechanism may generate a failure indication, e.g. for switching the motor controller to a failure state, for switching a main controller of the steering system, and/or switching another controller of the vehicle to a failure state.

The motor torque that shall be applied in reaction steering may include a restoring torque, especially consist of a restoring torque only. The restoring torque is for returning the steering input device to the neutral position. The restoring torque may depend on a vehicle speed and/or on the wheel direction angle. For example, the restoring torque may become stronger with increasing vehicle speed. Additionally or alternatively, the restoring torque may become stronger with increasing wheel direction angle.

The motor torque that shall be applied in active steering may include the restoring torque. Additionally or alternatively, it may include a damping torque. The damping torque provides an additional resistance (damping) against increasing the wheel direction angle of the steerable wheel(s) away from a neutral position, i.e. against moving the steering input device (further) away from its neutral position. The damping torque may increase with increasing movement speed of the steering input device, with increasing vehicle speed, and/or with more pronounced wheel direction angle.

Additionally, the operator may have to overcome inertia against movements of the steering input device during active steering.

According to one aspect, the permission map can be different for active steering and for reaction steering. As the motor torques in reaction steering may consist of the restoring torque only, at least for elevated movement speeds of the steering input device, the limits for the motor torques (and hence for the permissible torque-indicating values) can be set to less stronger values compared to active steering. A motor torque (and a corresponding torque-indicating value) that is comparatively strong might be expected and tolerated under some circumstances in active steering (e.g. in the case of a high vehicle speed, a pronounce wheel direction angle, and a fast movement speed of the steering input device), whereas the same motor torque would be unexpectedly high and result from an error in the case of reactive steering. With the less strong values for reaction steering, at least for elevated movement speeds of the steering input device, the safety mechanism is more sensitive to errors/malfunctions and can e.g. shut-off the electric motor earlier in the case of errors/malfunctions.

In one embodiment, the permission map includes, for reaction steering and for the same movement direction of the steering input device, differently strong permissible torque values depending on a movement speed of the steering input device.

For example, the permission map can include for reaction steering and (at least) for the same movement direction a first decrease of the absolute value of the permissible torque-indicative values, maybe additionally a second decrease, with increasing absolute value of the movement speed of the steering input device.

In one embodiment, the permission map covers an expected torques map with motor torques that can be expected to be generated by the electric motor in normal operation and additionally a tolerance adjacent to the expected torques map.

The additional tolerance prevents that the safety mechanism unnecessarily intervenes if the present torque-indicating value indicates a motor torque that is only slightly outside the expected torques map. A torque-indicating value in the tolerance "region" may be actually acceptable or at least not indicate a severe error / malfunction. Since the permission map includes the tolerance, unnecessary limitation of the motor-torques (e.g. by shutting down of the electric motor) can be prevented. As noted above, the torque calculation functionality and the safety mechanism can be implemented separately. For example, the torque calculation functionality might become updated, and this might lead to slightly higher motor torques under certain circumstances than before. The tolerance allows for such updates without additionally updating the safety mechanism.

According to one aspect, the safety mechanism is a software module for a motor controller for the electric motor. This allows easy implementation. The software module can be configured to receive the specific input data as input. The software module can be configured to access the permission map in a memory, e.g. in a memory of the motor controller. The software module can include the permission map and/or instructions for generating the permission map. The present invention is also directed to a computer-readable medium storing code for implementing/performing the safety mechanism with the permission map.

In one embodiment, the safety mechanism is configured to monitor, e.g. by monitoring corresponding data input(s), at least one of, several of, or all of the following:
- the motor torques,
- the electric currents supplied to the electric motor, the electric current being indicative of the motor torques,
- the control output data that is indicative of the motor torques and/or the electric currents supplied to the electric motor, the electric currents being indicative of the motor torques, and
- the specific input data, e.g. the information on the movement speed of the steering input device.

Especially, the safety mechanism may be configured to (continuously) monitor the movement speed of the steering input device and the torque-indicating value (e.g. the electric current) and to limit the motor torque (e.g. by shutting off the electric motor) as soon as a working point defined by these parameters is outside the permission map.

The problem mentioned above is further solved by a motor controller according to claim 8.

The motor controller is for an electric motor that is mechanically coupled with respect to a steering input device of a steering system for applying motor torques on the steering input device (e.g. for providing haptic feedback to the operator), wherein the steering input device is mechanically operable by an operator.

The motor controller includes the safety mechanism according to the present invention.

The possible embodiments, modifications, and advantages described with respect the safety mechanism may apply accordingly with respect to the motor controller and vice versa.

The motor controller can include a memory.

The permission map and/or instructions for generating the permission map can pre-stored in the memory.

The safety mechanism can include or consist of a software module. This software module (e.g. corresponding code) can be pre-stored in the memory.

The motor controller may be configured to receive the toque-indicating values, e.g. from a main controller of the steering system. It is possible that the motor controller itself includes the torque calculation functionality, e.g. as a further software module. Corresponding code can be pre-stored in the memory.

The motor controller can be configured to output electric currents for operating the electric motor. The motor torque applied by the electric motor depends on the electric currents. Hence, the electric currents are indicative of / equivalent to the motor torques. Also, internal control output data that may be sent e.g. from a processor in the motor controller to a current output generator in the motor controller can be indicative of / equivalent to the motor torques.

The motor controller can be configured for operating an electric motor that is an electronically commutated motor with at least three winding phases.

The problem mentioned above is further solved by a steering system with the features according to claim 10.

It is a steering system for a vehicle, wherein the steering system comprises a steering input device and an electric motor that is mechanically coupled with respect to the steering input device for applying motor torques on the steering input device, the steering input device being mechanically operable by an operator.

The steering system comprises at least the safety mechanism according to the present invention. The steering system can comprise the motor controller according to the present invention (wherein the motor controller includes the safety mechanism).

The embodiments, modifications, and advantages described with respect to any one of the safety mechanism and the motor controller may apply accordingly with respect to the steering system, and vice versa.

The steering input device can be a steering wheel. The steering system might include a steering column with a steering shaft that is mechanically coupled the steering input device. The electric motor can be mechanically coupled to the steering input device via the steering shaft. A rotor of the electric motor can form part of the steering shaft.

The steering system can be a hydraulic steering system.

It can comprise a hydraulic steering cylinder and hydraulic flow assembly for actuating the hydraulic steering cylinder, wherein the hydraulic flow assembly is operable using the steering input device. The steering input device might be functionally coupled with the hydraulic flow assembly mechanically and/or electronically for forwarding steering commands of the operator from the steering input device to the hydraulic flow assembly.

The hydraulic flow assembly can include a metering pump and/or an electrohydraulic valve assembly. The metering pump may be mechanically coupled with the steering input device, e.g. via the steering shaft and/or the electric motor.

The hydraulic flow assembly can be hydraulically coupled to the steering cylinder. The steering cylinder can be mechanically coupled to at least one steerable wheel.

The steering system may comprise a steering input sensor for measuring a position and/or the movement speed of the steering input device. The movement speed might be calculated based on subsequent positions. The steering system can be configured to vary a damping torque applied to the steering input device with the electric motor (at least) depending on the movement speed of the steering input device.

According to one aspect, the steering system comprises a wheel direction angle sensor for measuring a wheel direction angle of a steerable wheel, wherein the steering system is configured to vary at least a restoring torque applied to the steering input device with electric motor (at least) depending on the wheel direction angle. This allows for better haptic feedback to the operator and hence for better control of the vehicle.

Additionally or alternatively, the steering system can comprise a vehicle speed sensor for measuring a vehicle speed, and wherein the steering system is configured to vary at least one of the damping force and the restoring force applied to the steering input device with the electric motor (at least) depending on the vehicle speed. This allows for better haptic feedback to the operator and hence for better control of the vehicle. Especially, the restoring force and/or the damping force can be made stronger with increasing vehicle speed. This reduces the risk that the operator inadvertently jerks the steering input device at high vehicle speeds.

In one embodiment, the electric motor is an electronically commutated motor with at least three winding phases. Such an electric motor allows for precise application of desired motor torques.

The vehicle can be, for example, an agricultural vehicle (e.g. a tractor, a harvester, or a cherry picker), a building-site vehicle (e.g. a bulldozer, an excavator, a back-hoe, or an asphalt paver), a self-propelled working machine (e.g. a sweeper vehicle) or industrial machine, a heavy-duty machine (e.g. a truck), a utility machine (e.g. a forklift, a crane, or a telehandler), an off-highway vehicle, an all-terrain vehicle, a marine vehicle, or the like.

The invention is also directed to a vehicle with such the steering system.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: schematically shows a vehicle with a steering system according to the present invention comprising an electric motor that is mechanically coupled to a steering wheel via a steering shaft and a motor controller for driving the electric motor;
- Fig. 2: schematically shows a modification of the steering system of Fig. 1 with a main controller of the steering system separate from the motor controller; and
- Fig. 3A to 3C: schematically show a permission map defining permissible torque-indicating values in a plane spanned by an abscissa corresponding to a movement speed of the steering wheel of the steering system in Fig. 1 or Fig. 2 and an ordinate corresponding to the torque-indicating values.

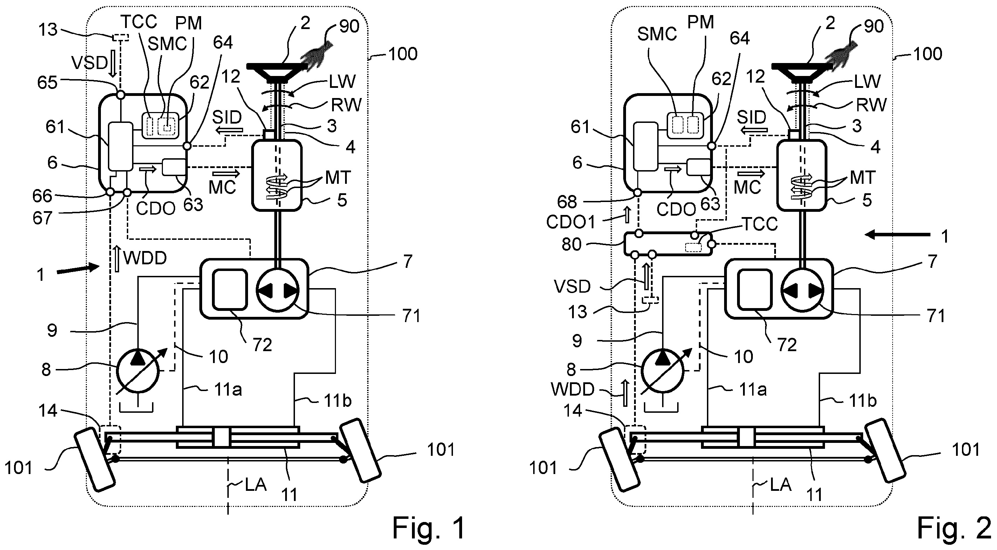

Fig. 1 shows a vehicle 100 with two steerable wheels 101. A wheel direction angle of the steerable wheels 101 with respect to a longitudinal axis LA of the vehicle 100 can be changed via a steering system 1.

The steering system 1 comprises a steering input device in form of a steering wheel 2. An operator 90 can mechanically input steering commands for changing the wheel direction angle using the steering wheel 2. Especially, the operator 90 can turn the steering wheel 2 in two opposite movement directions thereof, namely leftward LW and rightward RW. Turning the steering wheel 2 leftward LW may correspond, seen from the perspective of the operator 90, to a counterclockwise rotation of the steering wheel 2. Turning the steering wheel 2 rightward RW may correspond, seen from the perspective of the operator 90, to a clockwise rotation of the steering wheel 2.

The steering wheel 2 is mechanically rotationally coupled to a steering shaft 3 of a steering column 4.

An electric motor 5 is mechanically coupled to the steering shaft 3 and hence - via the steering shaft 3 - to the steering wheel 2. The electric motor 5 can apply motor torques MT onto the steering shaft 3 and hence to the steering wheel 2.

A motor controller 6 drives the electric motor 5. It supplies electric currents MC to the electric motor 5. The electric currents MC determine the motor torques MT that are generated by the electric motor 5 and are indicative of/equivalent to the motor torques MT.

It is noted that a rotor of the electric motor 5 can form part of the steering shaft 3.

Optionally, the motor controller 6 can be integrated into a housing of the electric motor 5.

In this example, the steering system 1 is a hydraulic steering system. It comprises a hydraulic flow assembly 7. The hydraulic flow assembly 7 allows for hydrostatic steering.

A hydraulic supply unit 8 supplies pressurized hydraulic fluid to the hydraulic flow assembly 7. The hydraulic supply unit 8 is connected to the hydraulic flow assembly 7 with a fluid supply line 9 and a fluid return line 10. The hydraulic supply unit 8 is part of the vehicle 100. It can form part of the steering system 1 as such.

The vehicle 100 has a steering cylinder 11, which is hydraulically coupled to the hydraulic flow assembly 7 via fluid connections 11a, 11b. The steering cylinder 11 and/or the fluid connections 11a, 11b can form part of the steering system 1.

The steerable wheels 101 are operatively connected to the hydraulic steering cylinder 11.

The hydraulic flow assembly 7 controls a supply of hydraulic fluid to the steering cylinder 9. It can include a traditional hydraulic steering unit with at least one metering pump 71. Additionally or alternatively, it can include at least one electrohydraulic valve assembly 72. In this embodiment, both a metering pump 71 and an electrohydraulic valve assembly 72 are shown in combination.

Regarding the traditional hydraulic steering unit, the following may apply: The steering wheel 2 is turnable by the driver. By turning the steering wheel 2, two elements of the traditional hydraulic steering unit, in particular a spool and a sleeve, are moved relatively to each other to open a number of orifices in a main flow path. This allows a certain amount of hydraulic fluid to pass the main flow path. This hydraulic fluid drives a flow meter which in turn restores an initial relative position of the two elements. Thus, the main flow path is closed again when the steerable wheels 101 have reached a position commanded by the steering wheel 2. Such a traditional hydraulic steering unit is known as OSP steering unit from the company Danfoss.

The metering pump 71 is mechanically coupled to the steering wheel 2 via the steering shaft 3.

A steering input sensor 12 can be arranged at the steering column 4, in the electric motor 5, and/or in the steering input device (e.g. the steering wheel 2) itself.

The steering input sensor 12 provides steering input data SID. The steering input data SID includes information from which a movement speed and a movement direction (i.e. leftward or rightward) of the steering wheel 2 can be obtained. For example, the steering input sensor 12 may directly measure the movement speed and the movement direction of the steering shaft 3 and hence of the steering wheel 2. It is possible that the steering input sensor 12 measures a (rotational) position of the steering shaft 3 and hence of the steering wheel 2. The movement speed and the movement direction of the steering wheel 2 can be obtained based on subsequent measurements of the (rotational) position in this case.

According to aspect, at least two of or all of the following may be built together in one unit: The electric motor 5, the motor controller 6, the steering column 4, the steering input sensor 12, and the hydraulic flow assembly 7.

According to another aspect, a vehicle speed sensor 13 can be provided. The vehicle speed sensor 13 provides vehicle speed data VSD that is indicative of a speed of the vehicle 100 (a vehicle speed).

Further, the vehicle 100 can include a wheel direction angle sensor 14. The wheel direction angle sensor 14 provides wheel direction angle data WDD that is indicative of the wheel direction angle of at least one of the steered wheels 101.

In the exemplary embodiment, the motor controller 6 includes a processor 61, a memory 62 that is in data connection with the processor 61, and a current output unit 63 that is in data connection with the processor 61.

The current output unit 63 is configured for supplying the electric currents MC for the electric motor 5 in accordance with control data output CDO. The control data output CDO is indicative of the electric currents MC to be applied and hence also motor torques MT to be applied. The control data output CDO may be provided by the processor 61 as shown in Fig. 1.

The motor controller 6 has an interface 64 for receiving the steering input data SID. The interface 64 can be in data connection with the processor 61.

For example, the motor controller 6 might receive the steering input data SID directly from the steering input sensor 12 as shown, from another controller, and/or from a data bus.

Optionally, the motor controller 6 has an input 65 for receiving the vehicle speed data VSD, e.g. directly from the vehicle speed sensor 13, from the other controller, and/or from the data bus. The interface 65 can be in data connection with the processor 61.

Additionally or alternatively, the motor controller 6 can have an input 66 for receiving the vehicle speed data VSD, e.g. directly from the vehicle speed sensor 13, from the other controller, and/or from the data bus. The interface 65 can be in data connection with the processor 61.

According to another aspect, the motor controller 6 can have an output 67 for outputting control data for the hydraulic flow assembly 7. For example, the motor controller 6 might be also configured to operate the electrohydraulic valve assembly 72 based at least on the steering input data SID. The motor controller 6 might also consider the wheel direction angle data and/or the vehicle speed data VSD for controlling the electrohydraulic valve assembly 72.

The motor controller 6 may be configured to calculate itself the control output data CDO based on one of, several of, or all of the steering input data SID, the vehicle speed data VSD, and the wheel direction angle data WDD.

Correspondingly, the motor controller 6 itself includes a torque calculation functionality. The torque calculation functionality may be implemented as a software module. The memory 62 may store instructions TCC for performing the torque calculation functionality. The instructions TCC may include computer program code.

However, it is also possible that the motor controller 6 has an interface 68 (see Fig. 2) for receiving control output data CDO1 being indicative of the motor torques MT which shall be applied by the electric motor 5.

As shown in an exemplary modification that is depicted in Fig. 2, another controller, e.g. a separate main controller 80 of the steering system 1 generates the control output data CDO1 that is indicative of the motor torques MT that shall be applied by the electric motor 5. Accordingly, the torque calculation functionality is implemented in the main controller 80 in this case. In other words, the torque calculation functionality and the safety mechanism are implemented in two different controllers 6, 80. Similarly, these functionalities could be implemented in two different controller parts of one controller. In Fig. 2, the processor 61 can generate the control output data CDO on the basis of control output data CDO1. Another possibility is that the processor 61 simply forwards the control output data CDO1 as control output data CDO.

Further, in Fig. 2, the main controller 80 controls the electrohydraulic valve assembly 72 and is connected with the vehicle speed sensor 13 and the wheel direction angle sensor 14. In Fig. 2, both the motor controller 6 and the main controller 80 directly receive the steering input data SID. In principle, it is sufficient if one of the controllers 6, 80 receives the steering input data SID and transmits the relevant information to the other one of the controllers 6, 80.

In Fig. 1, the motor controller 6 can include some of or all of the functionalities of the main controller 80 in Fig. 2.

In Figs. 1 and 2, the memory 62 of the motor controller 6 stores a permission map MP and/or code for generating the permission map MP.

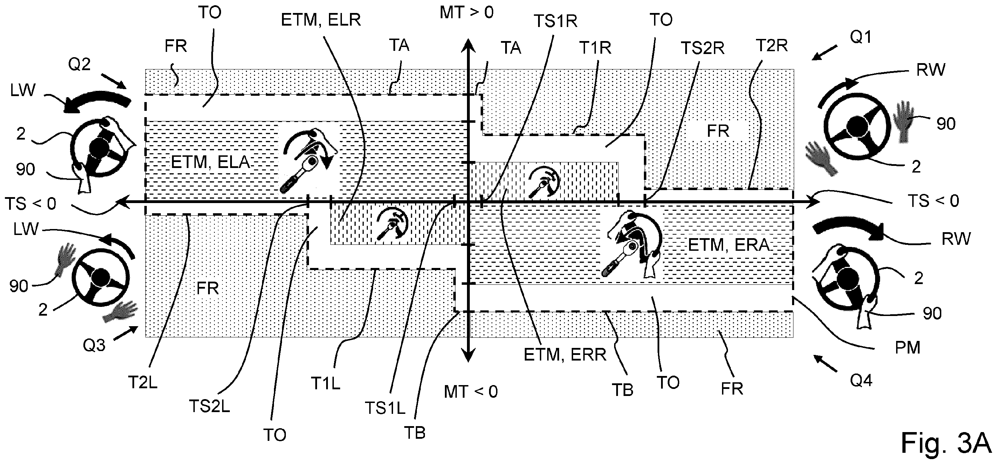

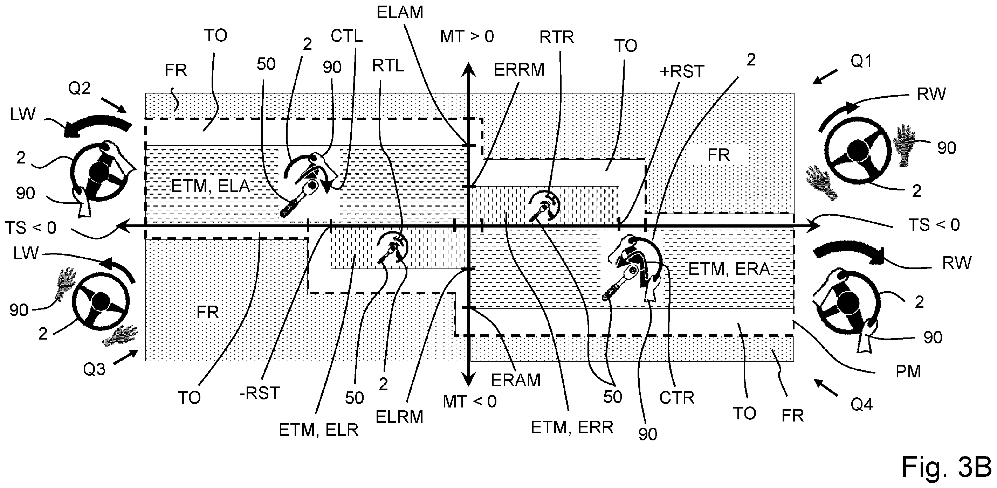

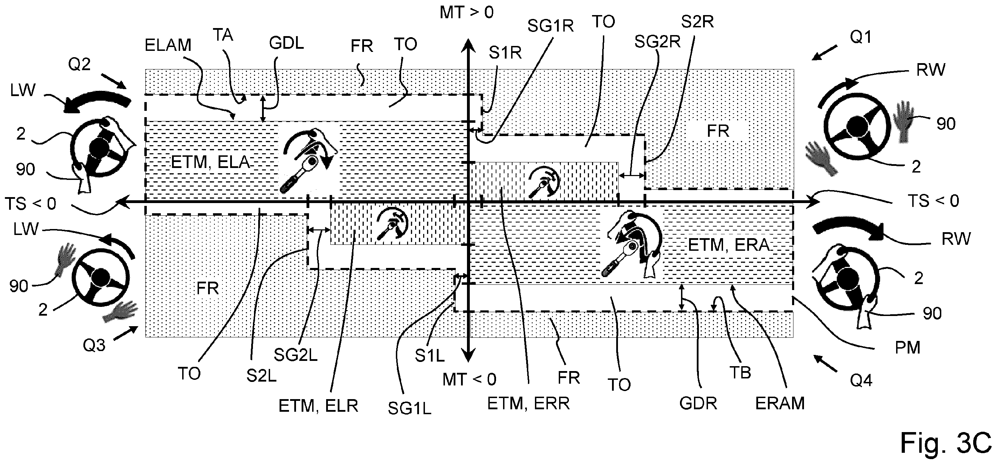

The permission map MP and a safety mechanism for shutting of the electric motor 5 are explained with regard to Figs. 3A to 3C. All Figs. 3A to 3C can be collectively referred to as Fig. 3.

The safety mechanism automatically shuts off the electric motor 5 in the case that the motor torque MT that shall be applied is outside the permission map MP. The motor torque MT is outside the permission map MP if it is, considering the present movement speed TS of the steering wheel 2, anywhere in a forbidden region FR. In Fig. 3, a border of the permission map MP may delimit the permission map MP from the forbidden region FR.

In other words, the safety mechanism automatically shuts off the electric motor 5 in the case that the motor torque MT (or an equivalent torque-indicating value) is in the forbidden region FR. This prevents that excessive motor torques or even motor torques that cannot be handled by the operator 90 are applied.

Figs. 3A to 3C show, respectively, an exemplary graphic representation of the permission map MP in a (virtual) plane that is spanned by the movement speed TS of the steering wheel 2 as the abscissa (x-axis) and the motor torque MT as the ordinate (y-axis). Here, the movement speed TS means a turning speed of the steering wheel 2. It is reminded that the electric currents MC and the control data outputs CDO, CDO1 are indicative of the motor torques MT to be applied by the electric motor 5. Hence, despite of the reference sign MT for the ordinate in Figs. 3, the permission map MP could be alternatively or additionally defined for the control data output CDO, the control data output CDO1, and/or the motor currents MC.

The movement speed TS having a positive value means that the steering wheel 2 is turning rightward RW. The movement speed TS having a negative value means that the steering wheel 2 is turning leftward RW. In other words, the sign of the movement speed TS indicates the movement direction of the steering wheel 2. An absolute value of the movement speed TS indicates a "fastness" of the movement speed. When the movement speed TS is zero, the steering wheel 2 does not turn at the moment.

When the motor torque MT has a positive value, the electric motor 5 shall apply a rightward-oriented motor torque MT. When the motor torque MT has a negative value, the electric motor MT shall apply a leftward-oriented motor torque. In other words, the sign of the motor torque MT (plus or minus) indicates the orientation of the motor torque MT. An absolute value of the motor torque MT (of the y-axis-value) corresponds to a strength of the motor torque MT to be applied. When the motor torque MT is zero, no motor torque MT shall be applied at the moment.

A first quadrant Q1 of the coordinate system in Fig. 3 relates to situations where the steering wheel 2 is turning rightward RW and the electric motor 5 shall apply a rightward-oriented motor torque MT. This applies in reaction steering for bringing the steering wheel 2 from a position left to a neutral position back to the neutral position. This corresponds to bringing the wheel direction angle from a leftward tilting (for a left-turn of the vehicle 100) back to a neutral wheel angle direction (for straight ahead movement of the vehicle 100). Accordingly, a pictogram on the upper right corner of Fig. 3 shows the steering wheel 2 turning rightward RW while the hands of the operator 90 are pulled away from the steering wheel 2.

Similarly, a third quadrant Q3 of the coordinate system in Fig. 3 relates to situations for leftward LW movement of the steering wheel 2 during reaction steering.

A second quadrant Q2 of the coordinate system in Fig. 3 relates to situations where the steering wheel 2 is turning leftward LW and the electric motor 5 applies a rightward-oriented motor torque MT. This applies during active steering when the operator 90 actively operates the steering wheel 2 leftward LW for moving the steerable wheels 101 leftward LW away from the neutral wheel angle direction. Accordingly, a pictogram on the upper left corner of Fig. 3 shows the steering wheel 2 turning leftward LW while the hands of the operator 90 engage the steering wheel 2.

Similarly, a fourth quadrant Q4 of the coordinate system in Fig. 3 relates to rightward RW active steering of the operator 90.

A symbol of a ratches 50, see especially Fig. 3B, symbolically illustrates the application of the motor torque MT of the electric motor 5 on the steering wheel 2.

During reaction steering (see the first quadrant Q1 and the third quadrant Q3), the motor torque MT is in the same direction as the movement speed TS. During the reaction steering, the motor torque MT consist of only a "restoring torque". The restoring torque serves for self-centering of the steering system 1 towards the neutral wheel direction angle and for providing corresponding feedback to the operator 90. The restoring torque may become stronger with increasing deviation of the wheel direction angle from the neutral wheel direction angle, i.e. with increasing absolute value of the wheel direction angle since the neutral wheel direction angle can be defined as zero. Additionally or alternatively, it may become stronger with increasing vehicle speed.

During active steering, the motor torque MT is oriented opposite to the movement speed TS. During active steering, the motor torque MT includes the restoring torque and an additional damping torque. The damping torque adds further "resistance" (damping) against increasing the absolute value of the wheel direction angle. The damping torque might become stronger with faster movement speed TS of the steering wheel 2, with increasing vehicle speed, and/or with increasing absolute value of the wheel direction angle.

Furthermore, in active steering, the operator 90 might feel inertia caused by the electric motor 5 (and/or other elements that are rotationally coupled to the steering wheel 2) as additional resistance against turning the steering wheel 2.

As evident from the above, the actual motor torque MT is dependent from different circumstances and can vary considerably. However, it is possible to define an "estimated torques map" ETM in which the motor torque MT can be expected to lie in normal operation under any circumstances.

The expected torques map ETM includes
- a sub-map ERR for rightward movement (of the steering wheel 2) during reaction steering (i.e. in the first quadrant Q1, TS > 0, MT > 0),
- a sub-map ELA for leftward movement during active steering (i.e. in the second quadrant Q2, TS < 0, MT > 0),
- and a sub-map ELR for leftward movement during reaction steering (in the third quadrant Q3, TS < 0, MT < 0), and
- a sub-map ERA for rightward movement during active steering (i.e. in the fourth quadrant Q4, TS > 0, MT < 0),

As the motor torques MT include the additional damping torque during active steering, the motor torques MT during active steering can be expected to reach higher strength (larger absolute values) than during reaction steering. This means that the expected torque maps ETM covers higher absolute values of the motor torques MT for active steering than for reaction steering.

As can be seen in Fig. 3B, in the example, the sub-map ELA has a leftward active strength maximum ELAM. In this context, "leftward" refers to the movement direction of the steering wheel 2, i.e. to the movement speed TS being negative, whereas a rightward-oriented counter-torque CTL applies. The rightward-oriented counter-torque CTL during leftward active steering is schematically depicted and referred to in the second quadrant Q2 in Fig. 3B. Similarly, a leftward-oriented counter-torque CTR during rightward active steering is schematically depicted and referred to in the fourth quadrant Q4.

The sub-map ELA has a minimum strength of zero (meaning no negative / leftward-oriented motor torque MT).

The sub-map ERA has a rightward active strength maximum ERAM and a minimum strength of zero (meaning no positive / rightward-oriented motor torque MT). It is noted that the rightward active strength maximum ERAM may correspond to -ELAM.

The sub-map ERR has a rightward reaction strength maximum ERRM and a minimum strength of zero (meaning no negative / leftward motor torque MT).

The sub-map ELR has a leftward reaction strength maximum ELRM and a minimum strength of zero (meaning no positive / rightward-oriented motor torque MT). It is noted that the leftward reaction strength maximum ELRM may correspond to -ERRM.

In can be desired that the steering wheel 2 cannot return back to the neutral position with arbitrarily fast movement speed TS. Hence, no motor torque MT is applied in reaction steering if the movement speed TS is faster than a certain restoring speed threshold RST. Accordingly, the sub-map ELR is capped at -RST and the sub-map ERR is capped at +RST (see Fig. 3B).

In Fig. 3B, a rightward-oriented restoring torque RTR is schematically depicted and referred to in the first quadrant Q1 and a leftward-oriented restoring torque RTL is schematically depicted and referred to in the third quadrant Q3.

The permission map MP defines permissible torque-indicating values. As long as the motor torques MT are within the permission map, the safety mechanism does not intervene. Again, it is noted that the electric currents MC and/or the control output data COD, COD1 can be considered equivalent to the motor torques MT.

The permission map MP at least completely covers the expected torques map ETM. As shown in Fig. 3, the permission map MP can additionally cover a tolerance TO adjacent to the expected torques maps. This prevents that the safety mechanism intervenes in the case of irrelevant, small errors/malfunctions.

A shape of the tolerance TO and/or a shape of the permission map MP can be adapted to a shape of the expected torques map ETM.

According to the depicted, exemplary implementation, in the second quadrant Q2, the permission map MP is bordered uniformly by a threshold TA. In the second quadrant Q2, the tolerance TO has a uniform tolerance gap GDL for leftward active steering.

Similarly, in the fourth quadrant Q4, the permission map MP is bordered uniformly by a threshold TB. In the fourth quadrant Q2, the tolerance TO has a uniform tolerance gap GDR for rightward active steering. It is noted that the threshold TA and the threshold TB might be of the same absolute value but of different signs, i.e. TB = -TA (corresponding to the opposite directions of the motor torques MT). The tolerance gaps GDL and GDR may be of the same width.

For reactive steering, i.e. in the first quadrant Q1 and in the third quadrant Q3, the border of the permission map MP is non-uniform, for example stepped.

In this exemplary implementation and as shown in Fig. 3A, in the first quadrant Q1 (i.e. for rightward reactive steering), the permission map MP is bordered by a threshold TA for slow movement speeds TS up to a first speed threshold TS1R. For movement speeds TS that are faster than the first speed threshold TS1R, the permission map MP is bordered by a first reduced threshold T1R. The first reduced threshold T1R corresponds to a motor torque MT being less strong than the threshold TA. In other words, an absolute value of the first reduced threshold T1R is lower than an absolute value of the threshold TA, for example by at least 10 %.

Accordingly, for rightward reaction steering, the border of the permission map MP has a (rightward) first decrease step S1R (see Fig. 3C) with increasing fastness of the movement speed TS. The tolerance TO leaves a "speed tolerance gap" SG1R between a zero-speed side of the sub-map ELA and the forbidden region FR outside the permission map MP in the first quadrant Q1.

The first reduced threshold T1R can be less strong (i.e. of smaller absolute value) than the leftward active strength maximum ELAM. The speed tolerance gap SG1R avoids unnecessary interventions of the security mechanism.

In the first quadrant Q1, for movement speeds TS that are faster than a second speed threshold TS2R which is faster than the first speed threshold TS1R, the permission map MP can be bordered by a second reduced threshold T2R. The second reduced threshold T2R corresponds to a motor torque MT being less strong than the first reduced threshold T1R. In other words, an absolute value of the second reduced threshold T2R is lower than an absolute value of the first reduced threshold T1R, for example by at least 10 %.

Accordingly, the border of the permission map MP in the first quadrant Q1 can have a (rightward) second decrease step SG2R (see Fig. 3C) with increasing fastness of the movement speed for rightward reaction steering. The tolerance TO leaves a speed tolerance gap SG2R between a fast-speed end of the expected torques map ETM in the first quadrant Q1 (see a fast-speed end of sub-map ERR at the movement speed +RST). Accordingly, the second speed threshold T2R is faster than the movement speed threshold RST.

The second reduced threshold T2R can be less strong than the rightward reaction strength maximum ERRM.

The explanations regarding the border of the permission map MP in the first quadrant Q1 may apply accordingly regarding the border of the permission map MP in the third quadrant Q3.

Similarly, the border of the permission map MP in the third quadrant Q3 can have a (leftward) first decrease step S1L (see Fig. 3C) at a (leftward) first speed threshold TS1L (e.g. -TS1R) with a torque strength dropping from the threshold TB (e.g. -TA) to a first reduced threshold T1L (e.g. -T1R). The tolerance TO can include a speed tolerance gap SG1L between a zero-speed side of the sub-map ERA and the forbidden area FR outside the permission map MP in the third quadrant Q3. The first reduced threshold T1L can be less strong (i.e. of smaller absolute value) than the rightward active strength maximum ERAM. Further, there can be a (leftward) second decrease step S2L (see Fig. 3C) at a (leftward) second speed threshold TS2L (e.g. -TS2R), corresponding to a further drop for the permitted motor torques to a second reduced threshold T2L (e.g. -T1L).

The permission map MP and/or the extended torques map ETM can be point-symmetrical to the origin of the coordinate system in Fig. 3. However, since the permission map MP has different shapes/characteristics for reaction steering and for active steering, the permission map MP is neither mirror-symmetrical to the abscissa nor mirror-symmetrical to the ordinate. The same applies regarding the expected torques map ETM.

When the safety mechanism intervenes (e.g. shuts off the electric motor 5), it may also generate a failure signal, e.g. for vehicle controller, the operator 90, the main controller 80, and/or the like.

When the safety mechanism intervenes, it might switch the motor controller 6 to a failure state. The motor controller 6 may be configured to keep the electric motor 5 shut down as long as the failure state applies. Switching the motor controller 6 out a failure state may require a specific confirmation, e.g. from the operator 90 or a repair crew member.

Instructions SMC for performing the safety mechanism can be pre-stored in the memory 62 of the motor controller 6. The instructions may include corresponding computer program code. The permission map MP (and/or the instructions for generating the permission map MP) can form part of the instructions SMC.

Even in the case of Fig. 1, the safety mechanism is implemented separately from the torque calculation functionality. Two corresponding separate software modules are provided (see separates instructions TCC and SMC in Fig. 1). In Fig. 2, the software module providing the torque calculation functionality is even implanted in a controller (i.e. the main controller 80, see instructions TCC in Fig. 2) different from the motor controller 6 with the safety mechanism.

Globally, the maximum motor torques MT that are permitted by the permission map MP are the motor torques MT that correspond to the absolute value of the thresholds TA and TB. Hence, this absolute value can be referred to as global maximum torque.

### List of reference signs:

- 1: steering system
- 2: steering input device (steering wheel)
- 3: steering shaft
- 4: steering column
- 5: electric motor
- 6: motor controller
- 7: hydraulic flow assembly
- 8: hydraulic supply line
- 9: fluid supply line
- 10: fluid return line
- 11: steering cylinder
- 11a, 11b: fluid connections
- 12: steering input sensor
- 13: vehicle speed sensor
- 14: wheel direction angle sensor
- 50: symbol of a ratchet
- 61: processor
- 62: memory
- 63: current output unit
- 64, 65, 66: interface
- 67: output
- 68: interface
- 71: metering pump
- 72: electrohydraulic valve assembly
- 80: main controller
- 90: operator
- 100: vehicle
- 101: steerable wheel
- CDO, CDO1: control data output
- CTL, CTR: counter-torque
- ELA, ERA: sub-map
- ELR, ERR: sub-map
- ELAM, ERAM: active strength maximum
- ETM: estimated torques map
- FR: forbidden region
- GDL, GDR: tolerance gap
- LA: longitudinal axis
- LW: leftward
- MC: electric current
- MT: motor torque
- PM: permission map
- Q1: first quadrant
- Q2: second quadrant
- Q3: third quadrant
- Q4: fourth quadrant
- RTL, RTR: restoring torque
- RW: rightward
- S1L, S1R: first decrease step
- S2L, S2R: second decrease step
- SG1L, SG1R: speed tolerance gap
- SG2L, SG2R: speed tolerance gap
- SID: steering input data
- SMC: instructions
- SMC: instructions
- TA, TB: threshold
- T1L, T1R: first reduced threshold
- T2L, T2R: second reduced threshold
- TS1L, TS2R: first speed threshold
- TS2L, TS2R: second speed threshold
- TCC: instructions
- TO: tolerance
- TS: movement speed
- RST: restoring speed threshold
- VSD: vehicle speed data
- WDD: wheel direction angle data

## Claims

1. Safety mechanism for limiting motor torques (MT) provided by an electric motor (5) that is mechanically coupled with respect to a steering input device (2) of a steering system (1) for applying the motor torques (MT) on the steering input device (2), the steering input device (2) being mechanically operable by an operator (90), wherein torque-indicating values are indicative of the motor torques (MT),
wherein the safety mechanism at least limits the motor torque (MT) if the torque-indicating value is outside a permission map (PM) of permissible torque-indicating values.

2. Safety mechanism according to claim 1, wherein the safety mechanism shuts down the electric motor (5) if the motor torque (MT) is outside the permission map (PM).

3. Safety mechanism according to any one of the preceding claims, wherein the permission map (PM) is different for active steering and for reaction steering.

4. Safety mechanism according to any one of the preceding claims, wherein the permission map (PM) includes, for reaction steering and for a same movement direction (LW, RW) of the steering input device (2), differently strong permissible torque values (TA, TB, T1L, T1R, T2L, T2R) depending on a movement speed (TS) of the steering input device (2).

5. Safety mechanism according to any one of the preceding claims, wherein the permission map (PM) covers an expected torques map (ETM) with motor torques (MT) that can be expected to be applied by the electric motor (5) in normal operation and additionally a tolerance (TO) adjacent to the expected torques map (ETM).

6. Safety mechanism according to any one of the preceding claims, wherein the safety mechanism is a software module for a motor controller (6) for the electric motor (5).

7. Safety mechanism according to any one of the preceding claims, wherein safety mechanism is configured to monitor at least one of, several of, or all of the following:
- the motor torques (MT),
- electric currents (MC) supplied to the electric motor (5), the electric currents (MC) being indicative of the motor torques (MT),
- control output data (COD) that is indicative of the motor torques (MT) and/or the electric currents (COD) supplied to the electric motor (5), the electric currents (COD) being indicative of the motor torques (MT), and
- information on a movement speed of the steering input device (2).

8. Motor controller (6) for an electric motor (5) that is mechanically coupled with respect to a steering input device (2) of a steering system (1) for applying motor torques (MT) on the steering input device (2), the steering input device (2) being mechanically operable by an operator (90),
wherein the motor controller (6) includes the safety mechanism according to any one of the preceding claims.

9. Motor controller (6) according to claim 8, wherein the motor controller (6) includes a memory (62), wherein the permission map (PM) and/or instructions for generating the permission map (PM) are pre-stored in the memory (62).

10. Steering system (1) for a vehicle (100), wherein the steering system (1) comprises a steering input device (2) and an electric motor (5) that is mechanically coupled with respect to the steering input device (2) for applying motor torques (MT) on the steering input device (2), the steering input device (2) being mechanically operable by an operator (90),
wherein the steering system (1) comprises at least one of
- the safety mechanism according to any one of the claims 1 to 7 and
- the motor controller (6) according to claim 8 or 9.

11. Steering system (1) according to claim 10, wherein the steering system (1) is a hydraulic steering system and comprises a hydraulic steering cylinder (9) and hydraulic flow assembly (7) for actuating the hydraulic steering cylinder (9), wherein the hydraulic flow assembly (7) is operable with steering input device (2).

12. Steering system (1) according to claim 10 or 11, wherein the steering system (1) comprises a steering input sensor (12) for measuring a position and/or the movement speed (TS) of the steering input device (2).

13. Steering system (1) according to any one of the claims 10 to 12, wherein the steering system (1) comprises a wheel direction angle sensor (14) for measuring a wheel direction angle of a steerable wheel (101), wherein steering system (1) is configured to vary at least the restoring torque (RTL, RTR) applied to the steering input device (2) with the electric motor (5) depending on the wheel direction angle.

14. Steering system (1) according to any one of the claims 11 to 13, wherein the steering system (1) comprises a vehicle speed sensor (13) for measuring a vehicle speed, and wherein the steering system (1) is configured to apply a restoring force (RTL, RTR) and/or a damping force applied to the steering input device (2) with the electric motor (5) depending on the vehicle speed.

15. Steering system (1) according to any one of the claims 11 to 14, wherein the electric motor (5) is an electronically commutated motor with at least three winding phases.

## Amended claims

### Amended claims in accordance with Rule 137(2) EPC.

1. Safety mechanism for limiting motor torques (MT) provided by an electric motor (5) that is mechanically coupled with respect to a steering input device (2) of a steering system (1) for applying the motor torques (MT) on the steering input device (2), the steering input device (2) being mechanically operable by an operator (90), wherein torque-indicating values are indicative of the motor torques (MT),
wherein the safety mechanism at least limits the motor torque (MT) if the torque-indicating value is outside a permission map (PM) of permissible torque-indicating values,
**characterized in that** the permission map (PM) is different for active steering and for reactive steering,
wherein active steering includes situations when the user actively mechanically operates the steering input device for increasing a wheel direction angle of a steerable wheel away from a neutral wheel direction angle, and
wherein reactive steering includes
- situations when the operator does not operate the steering input device,
- situations when the operator holds the steering input device without increasing the wheel direction angle of the steerable wheel away from the neutral position, and
- situations when the operator slows down a restoring movement of the steering input device towards a neutral position.

2. Safety mechanism according to claim 1, wherein the safety mechanism shuts down the electric motor (5) if the motor torque (MT) is outside the permission map (PM).

3. Safety mechanism according to any one of the preceding claims, wherein the permission map (PM) includes, for reaction steering and for a same movement direction (LW, RW) of the steering input device (2), differently strong permissible torque values (TA, TB, T1L, T1R, T2L, T2R) depending on a movement speed (TS) of the steering input device (2).

4. Safety mechanism according to any one of the preceding claims, wherein the permission map (PM) covers an expected torques map (ETM) with motor torques (MT) that can be expected to be applied by the electric motor (5) in normal operation and additionally a tolerance (TO) adjacent to the expected torques map (ETM).

5. Safety mechanism according to any one of the preceding claims, wherein the safety mechanism is a software module for a motor controller (6) for the electric motor (5).

6. Safety mechanism according to any one of the preceding claims, wherein safety mechanism is configured to monitor at least one of, several of, or all of the following:
- the motor torques (MT),
- electric currents (MC) supplied to the electric motor (5), the electric currents (MC) being indicative of the motor torques (MT),
- control output data (COD) that is indicative of the motor torques (MT) and/or the electric currents (COD) supplied to the electric motor (5), the electric currents (COD) being indicative of the motor torques (MT), and
- information on a movement speed of the steering input device (2).

7. Motor controller (6) for an electric motor (5) that is mechanically coupled with respect to a steering input device (2) of a steering system (1) for applying motor torques (MT) on the steering input device (2), the steering input device (2) being mechanically operable by an operator (90),
wherein the motor controller (6) includes the safety mechanism according to any one of the preceding claims.

8. Motor controller (6) according to claim 7, wherein the motor controller (6) includes a memory (62), wherein the permission map (PM) and/or instructions for generating the permission map (PM) are pre-stored in the memory (62).

9. Steering system (1) for a vehicle (100), wherein the steering system (1) comprises a steering input device (2) and an electric motor (5) that is mechanically coupled with respect to the steering input device (2) for applying motor torques (MT) on the steering input device (2), the steering input device (2) being mechanically operable by an operator (90),
wherein the steering system (1) comprises at least one of
- the safety mechanism according to any one of the claims 1 to 6 and
- the motor controller (6) according to claim 7 or 8.

10. Steering system (1) according to claim 9, wherein the steering system (1) is a hydraulic steering system and comprises a hydraulic steering cylinder (9) and hydraulic flow assembly (7) for actuating the hydraulic steering cylinder (9), wherein the hydraulic flow assembly (7) is operable with steering input device (2).

11. Steering system (1) according to claim 9 or 10, wherein the steering system (1) comprises a steering input sensor (12) for measuring a position and/or the movement speed (TS) of the steering input device (2).

12. Steering system (1) according to any one of the claims 9 to 11, wherein the steering system (1) comprises a wheel direction angle sensor (14) for measuring a wheel direction angle of a steerable wheel (101), wherein steering system (1) is configured to vary at least the restoring torque (RTL, RTR) applied to the steering input device (2) with the electric motor (5) depending on the wheel direction angle.

13. Steering system (1) according to any one of the claims 10 to 12, wherein the steering system (1) comprises a vehicle speed sensor (13) for measuring a vehicle speed, and wherein the steering system (1) is configured to apply a restoring force (RTL, RTR) and/or a damping force applied to the steering input device (2) with the electric motor (5) depending on the vehicle speed.

14. Steering system (1) according to any one of the claims 10 to 13, wherein the electric motor (5) is an electronically commutated motor with at least three winding phases.
